# EUROPÄISCHE PATENTSCHRIFT

(11) **EP 3 630 569 B1**
(45) Veröffentlichungstag und Bekanntmachung des Hinweises auf die Patenterteilung: **25.08.2021**
(21) Anmeldenummer: 18717264.8
(22) Anmeldetag: 29.03.2018
(51) Int. Cl.: B60W 50/00, B60W 50/10, B60W 50/14, B60W 30/18, B60W 30/06, B62D 15/02

(54) **VERFAHREN ZUM BETREIBEN EINES KRAFTFAHRZEUGS SOWIE EIN KRAFTFAHRZEUG**
METHOD FOR OPERATING A MOTOR VEHICLE AND A MOTOR VEHICLE
PROCÉDÉ POUR FAIRE FONCTIONNER UN VÉHICULE AUTOMOBILE ET VÉHICULE AUTOMOBILE

(30) Priorität: 22.05.2017 DE 102017208646
(43) Veröffentlichungstag der Anmeldung: 08.04.2020
(73) Patentinhaber: Audi AG, 85045 Ingolstadt (DE)
(72) Erfinder: KRETSCHMANN, Philipp, 85077 Manching (DE); KAIN, Saskia, 13355 Berlin (DE)
(86) Internationale Anmeldenummer: PCT/EP2018/058082
(87) Internationale Veröffentlichungsnummer: WO 2018/215121

(56) Entgegenhaltungen:
- EP-A1- 3 121 085
- DE-A1-102014 216 269
- DE-A1-102015 204 122
- US-A1- 2010 060 482
- US-A1- 2015 158 486

## Beschreibung

Die Erfindung betrifft ein Verfahren zum Betreiben eines Kraftfahrzeugs sowie ein Kraftfahrzeug gemäß den unabhängigen Patentansprüchen.

Ein Verfahren zum Betreiben eines Kraftfahrzeugs ist bereits aus der DE 10 2011 087 791 A1 bekannt. Dieses Verfahren dient der Erkennung einer Situation, in welcher ein Fahrer des Kraftfahrzeugs in Bezug auf ein Objekt außerhalb des Kraftfahrzeugs eine manuelle Handlung vornehmen will. Des Weiteren unterstützt das Verfahren eine Ausrichtung des Kraftfahrzeugs in Bezug auf das Objekt. Hierfür wird mittels einer Sensoreinrichtung des Kraftfahrzeugs ein Anhaltepunkt in Bezug auf das Objekt, welches beispielsweise ein Parkscheinautomat sein kann, für das Kraftfahrzeug ermittelt.

Aus der DE 10 2014 018 189 A1 ist ein Verfahren zum Betrieb eines Fahrzeugs in einer Parkvorgangssituation bekannt. Bei diesem Verfahren wird ermittelt, ob sich das Fahrzeug in einer vorgegebenen Parkvorgangssituation befindet, wobei einem Fahrzeugnutzer eine der vorgegebenen Parkvorgangssituation zugeordnete vorgegebene fahrzeugspezifische oder parkvorgangssituationsspezifische Funktion angeboten oder automatisch aktiviert wird, wenn sich das Fahrzeug in der einen vorgegebenen Parkvorgangssituation befindet.

Aus der DE 10 2014 206 901 A1 ist schließlich ein Verfahren zur Unterstützung eines Fahrers eines Fahrzeuges in Manöversituationen bekannt. Dabei umfasst das Fahrzeug Mittel zur Situationserkennung, mittels welchen eine Situation sowie eine Position des Fahrzeuges erkennbar ist, gemäß der dem Fahrer Unterstützung beim Manövrieren angeboten werden soll. Anschließend werden gemäß der Situation unterschiedliche Manöveroptionen erstellt, priorisiert und dem Fahrer des Fahrzeugs zur Auswahl ausgegeben.

Die DE 10 2015 204 122 A1 offenbart darüber hinaus eine Kommunikationseinrichtung eines Fahrzeugs, mittels welcher Ampelphaseninformationen von einer Ampel abrufbar sind. Anhand dieser Ampelphaseninformationen und anhand von Fahrzeuginformationen, etwa einer Geschwindigkeit des Fahrzeugs und des Abstands zu einer Haltelinie, wird ermittelt, ob das Fahrzeug vor der Haltelinie anhalten muss oder ob eine Durchfahrt ohne Halt erfolgen kann.

Überdies ist aus der DE 10 2010 063 006 A1 ein Verfahren zum Betreiben eines Fahrerassistenzsystems eines Fahrzeugs bekannt. Bei dem Verfahren wird mittels einer Frontkamera ein Bild eines vor dem Fahrzeug liegenden Bereichs aufgenommen und auf ein Vorhandensein einer Haltelinie ausgewertet. Des Weiteren erfolgt basierend auf der Auswertung ein selektives Auslösen einer automatischen Reaktion des Fahrerassistenzsystems zum zielgenauen Anhalten an der Haltelinie.

Des Weiteren ist aus der DE 10 2013 005 362 A1 ein Verfahren zur Analyse einer Verkehrssituation bekannt. Bei dem Verfahren erfasst eine Kamera eine Straßenmarkierung einer Haltelinie oder Stopplinie und ermittelt den Abstand dieser zur aktuellen Position eines Fahrzeugs. Überdies wird ein erwarteter virtueller Zustand einer jeweiligen Lichtzeichenanlage zum Zeitpunkt eines Eintretens des Fahrzeugs in eine Straßenkreuzung ermittelt. Dieser virtuelle Zustand der Lichtzeichenanlage wird dann innerhalb des Fahrzeugs an den Fahrer zur Unterstützung seiner Planung der Weiterfahrt beim Überqueren der Straßenkreuzung optisch und/oder akustisch und/oder haptisch ausgegeben.

Ferner ist aus der DE 10 2014 216 269 A1 ein Verfahren zum automatischen Regeln des Fahrverhaltens von Fahrzeugen an einer Wechsellichtzeichenanlage bekannt. Hierbei werden aktuelle Fahrpositionen und aktuelle Fahrgeschwindigkeiten von Fahrzeugen, die sich vor der Wechsellichtzeichenanlage zur Durchfahrt durch die Wechsellichtzeichenanlage befinden, erfasst. Bei dem Verfahren wird insbesondere ein Anhalten und ein Abfahren von Fahrzeugen an der Wechsellichtzeichenanlage automatisch und in synchronisierter Weise geregelt oder gesteuert.

Überdies offenbart die US 2010/0060482 A1 ein Verfahren, bei welchem eine Mehrzahl an Fahrzeugen synchronisiert gesteuert wird.

Aufgabe der vorliegenden Erfindung ist es, ein Verfahren zum Betreiben eines Kraftfahrzeugs sowie ein Kraftfahrzeug zu schaffen, mittels welchen der Fahrer des Kraftfahrzeugs in Bezug auf zeitabhängige Anhaltepunkte assistiert wird.

Diese Aufgabe wird erfindungsgemäß durch ein Verfahren zum Betreiben eines Kraftfahrzeugs sowie durch ein Kraftfahrzeug mit den Merkmalen der unabhängigen Patentansprüche gelöst. Vorteilhafte Ausgestaltungen mit zweckmäßigen Weiterbildungen der Erfindung sind in den jeweils abhängigen Ansprüchen sowie in der folgenden Beschreibung angegeben.

Zur Schaffung eines Verfahrens zum Betreiben eines Kraftfahrzeugs der eingangs genannten Art, mittels welchem der Fahrer des Kraftfahrzeugs beim Manövrieren in Bezug auf zeitabhängige Anhaltepunkte besonders vorteilhaft unterstützt wird, ist es vorgesehen, dass das Kraftfahrzeug eine Notwendigkeit, am Anhaltepunkt anzuhalten, ermittelt. Bei einem Bestehen der Notwendigkeit bewirkt das Kraftfahrzeug am Anhaltepunkt ein Anhalten des Kraftfahrzeugs. Bei einem Nichtbestehen der Notwendigkeit führt eine Steuereinrichtung des Kraftfahrzeugs eine Bewegung des Kraftfahrzeugs durch oder gibt einen das Nichtbestehen der Notwendigkeit charakterisierenden Hinweis an den Fahrer des Kraftfahrzeugs aus. Mit anderen Worten ermittelt das Kraftfahrzeug die insbesondere zeitabhängige Notwendigkeit, am Anhaltepunkt anzuhalten und bewirkt bei der bestehenden Notwendigkeit durch ein Abbremsen mittels der Steuereinrichtung oder durch eine Ausgabe eines Bremssignals an den Fahrer des Kraftfahrzeugs das Anhalten des Kraftfahrzeugs. Besteht keine Notwendigkeit für das Kraftfahrzeug am Anhaltepunkt anzuhalten beziehungsweise besteht keine Notwendigkeit mehr, so kann die Steuereinrichtung eine entsprechende Bewegung des Kraftfahrzeugs durchführen oder den das Nichtbestehen der Notwendigkeit charakterisierenden Hinweis an den Fahrer des Kraftfahrzeugs ausgeben. Dabei ist es unerheblich, ob sich das Kraftfahrzeug dem Anhaltepunkt nähert und keine Notwendigkeit besteht oder ob das Kraftfahrzeug an dem Anhaltepunkt aufgrund einer vorzeitig bestehenden Notwendigkeit angehalten hat und die Notwendigkeit, am Anhaltepunkt anzuhalten, weggefallen ist. Vorteilhafterweise kann somit der Fahrer des Kraftfahrzeugs beim Manövrieren in Bezug auf den Anhaltepunkt unterstützt werden, wobei bei dem Anhaltepunkt zeitweise die Notwendigkeit für das Kraftfahrzeug bestehen kann anzuhalten und zeitweise keine Notwendigkeit bestehen kann für das Kraftfahrzeug anzuhalten.

Hierbei ist es vorgesehen, dass das Kraftfahrzeug eine Fahrinformation mit wenigstens einem weiteren Kraftfahrzeug austauscht und in Abhängigkeit von der Fahrinformation den Anhaltepunkt ermittelt. Dies ist insbesondere relevant, wenn mehrere Kraftfahrzeuge beabsichtigen, am Anhaltepunkt anzuhalten. Über den Austausch der Fahrinformation zwischen den Kraftfahrzeugen können Anhaltevorgänge der Kraftfahrzeuge miteinander koordiniert werden. Die Koordination kann beispielsweise in Bezug auf eine zeitliche Reihenfolge des jeweiligen Anhaltens der Kraftfahrzeuge am Anhaltepunkt erfolgen. Alternativ oder zusätzlich kann die Koordination in Bezug auf eine Aufteilung der Kraftfahrzeuge auf unterschiedliche, sich innerhalb eines definierten Umkreises befindende Anhaltepunkte erfolgen. Es ist darüber hinaus möglich, dass dem Fahrer des Kraftfahrzeugs mehrere unterschiedliche, im Zuge der Koordination mögliche Szenarien vorgeschlagen werden, aus welchen der Fahrer mittels einer Eingabe ein Szenario zur Durchführung auswählen kann. Durch die Koordination kann beispielsweise eine besonders vorteilhafte zeitliche Effizienz geschaffen werden, sodass der Anhaltevorgang der Kraftfahrzeuge beispielsweise an einem Parkscheinautomaten zum Ziehen eines Parktickets besonders wenig Zeit in Anspruch nimmt.

Erfindungsgemäß ist vorgesehen, dass das Kraftfahrzeug von dem Fahrer über Sprachsteuerung und/oder Gestensteuerung eine Einstellinformation bezüglich einer einzustellenden Position des angehaltenen Kraftfahrzeugs empfängt und in Abhängigkeit davon die Position des Kraftfahrzeugs einstellt. Mit anderen Worten kann der Fahrer dem Kraftfahrzeug über Sprachsteuerung und/oder Gestensteuerung die Einstellinformation übermitteln, welche die Position des Kraftfahrzeugs im angehaltenen Zustand charakterisiert, welche der Fahrer einzustellen wünscht. In Abhängigkeit von der Einstellinformation stellt beispielsweise die Steuereinrichtung die Position des Kraftfahrzeugs ein. Beispielsweise wird das Kraftfahrzeug von der Steuereinrichtung bei Bestehen der Notwendigkeit am Anhaltepunkt angehalten und der Fahrer justiert die Position des Kraftfahrzeugs mittels der über Sprachsteuerung und/oder Gestensteuerung an das Kraftfahrzeug übertragenen Einstellinformation, anhand welcher die Steuereinrichtung die Position des Kraftfahrzeugs einstellt, nach. Dies ermöglicht, dass der Fahrer mittels der Sprachsteuerung und/oder der Gestensteuerung das Kraftfahrzeug am Anhaltepunkt in der Position positioniert, welche für ihn besonders komfortabel ist.

Weiterhin erfindungsgemäß ist vorgesehen, dass das Kraftfahrzeug die einzustellende Position in Abhängigkeit von dem Anhaltepunkt fahrerspezifisch speichert. Mit anderen Worten wird die von der Sprachsteuerung und/oder Gestensteuerung übertragene Einstellinformation bezüglich der einzustellenden Position von dem Kraftfahrzeug gespeichert und auf zukünftige Manövriervorgänge im Zusammenhang mit ähnlichen Anhaltepunkten angewandt. Die Unterstützung des Anhaltens am Anhaltepunkt bei bestehender Notwendigkeit kann somit an Vorlieben des Fahrers bezüglich der Position des angehaltenen Kraftfahrzeugs auch bei zukünftigen Anhaltevorgängen an dem Anhaltepunkt beziehungsweise an ähnlichen Anhaltepunkten angepasst werden.

In einer vorteilhaften Ausgestaltung der Erfindung ist vorgesehen, dass die Steuereinrichtung das Kraftfahrzeug bei bestehender Notwendigkeit an den Anhaltepunkt manövriert und am Anhaltepunkt anhält. Mit anderen Worten übernimmt die Steuereinrichtung bei bestehender Notwendigkeit eine Steuerung des Kraftfahrzeugs, sodass der Fahrer beispielsweise in einem autonomen Fahrmodus bei bestehender Notwendigkeit das Kraftfahrzeug nicht manuell steuern muss. Es besteht somit ein besonders geringes Unfallrisiko, da das Kraftfahrzeug die Notwendigkeit, am Anhaltepunkt anzuhalten, erkennt und die Steuereinrichtung ein Ansteuern des Anhaltepunkts sowie das Anhalten des Kraftfahrzeugs ausführt.

In diesem Zusammenhang hat es sich als vorteilhaft gezeigt, wenn das Kraftfahrzeug eine Anhalteinformation von einer Verkehrsinfrastrukturkomponente empfängt und in Abhängigkeit von der Anhalteinformation den Anhaltepunkt ermittelt und/oder die Notwendigkeit, am Anhaltepunkt anzuhalten, ermittelt. Das bedeutet, dass das Kraftfahrzeug die Anhalteinformation, welche beispielsweise die Notwendigkeit am Anhaltepunkt anzuhalten charakterisiert, von der Verkehrsinfrastrukturkomponente, bei welcher es sich beispielsweise um eine Ampel handeln kann, empfängt. Beinhaltet die Anhalteinformation beispielsweise, dass die Ampel ein rotes Lichtzeiten aussendet, so kann das Kraftfahrzeug in Abhängigkeit davon ermittelt, dass die Notwendigkeit, am Anhaltepunkt anzuhalten, besteht. Vorteilhafterweise kann hierdurch der Fahrer des Kraftfahrzeugs auf das Bestehen der Notwendigkeit, am Anhaltepunkt anzuhalten, aufmerksam gemacht werden oder auf das Nichtbestehen der Notwendigkeit, am Anhaltepunkt anzuhalten, aufmerksam gemacht werden. Auch kann ein entsprechendes Fahrmanöver von der Steuereinrichtung des Kraftfahrzeugs durchgeführt werden, sodass der Fahrer des Kraftfahrzeugs beim Führen des Kraftfahrzeugs unterstützt wird.

Vorzugsweise ermittelt das Kraftfahrzeug in Abhängigkeit von der Anhalteinformation einen Zeitpunkt und eine Dauer für das Bestehen der Notwendigkeit und gibt diese an den Fahrer aus. Mit anderen Worten übermittelt die Verkehrsinfrastrukturkomponente die Anhalteinformation an das Kraftfahrzeug, wobei die Anhalteinformation den Zeitpunkt und die Dauer für das Bestehen der Notwendigkeit charakterisiert. Alternativ kann es sich bei der Verkehrsinfrastrukturkomponente beispielsweise um eine Schrankeneinrichtung an einem Bahnübergang handeln, wobei die von der Schrankeneinrichtung übermittelte Anhalteinformation beispielsweise charakterisiert ob, wann und wie lange ein Zug den Bahnübergang passiert. Folglich kann das Kraftfahrzeug ermitteln ob, ab wann und wie lange die Notwendigkeit am Anhaltepunkt anzuhalten für das Kraftfahrzeug besteht. Dies ermöglicht, dass der Fahrer des Kraftfahrzeugs bei einem Wegfall der Notwendigkeit nach Ablauf der Dauer auf den Wegfall der Notwendigkeit am Anhaltepunkt anzuhalten hingewiesen wird, und/oder die Steuereinrichtung des Kraftfahrzeugs die Bewegung des Kraftfahrzeugs durchführt, insbesondere das Kraftfahrzeug am Anhaltepunkt vorbeibewegt.

In einer weiteren vorteilhaften Ausgestaltung der Erfindung ist vorgesehen, dass das Kraftfahrzeug wenigstens zwei Anhaltepunkte ermittelt und in Abhängigkeit von einer einen ersten der Anhaltepunkte charakterisierenden Eingabe des Fahrers das Kraftfahrzeug an den ersten Anhaltepunkt mittels der Steuereinrichtung hinmanövriert und an diesem in Abhängigkeit von der Notwendigkeit anhält. Dies bedeutet, dass das Kraftfahrzeug die wenigstens zwei Anhaltepunkte ermittelt, die jeweilige Notwendigkeit für das Kraftfahrzeug an den jeweiligen Anhaltepunkten anzuhalten ermittelt und bei der bestehenden Notwendigkeit an wenigstens einem der Anhaltepunkte anzuhalten, den Fahrer des Kraftfahrzeugs zu der einen ersten der Anhaltepunkte charakterisierenden Eingabe auffordert. In Abhängigkeit von der den ersten der Anhaltepunkte charakterisierenden Eingabe des Fahrers steuert die Steuereinrichtung das Kraftfahrzeug an den Anhaltepunkt hin und hält das Kraftfahrzeug dort an. Alternativ unterstützt die Steuereinrichtung den Fahrer des Kraftfahrzeugs beim Anmanövrieren des ersten der Anhaltepunkte und dem dortigen Anhalten des Kraftfahrzeugs. Beispielsweise kann das Kraftfahrzeug bei einer Einfahrt in ein Parkhaus an einem von mehreren Parkscheinautomaten anhalten müssen, sodass der Fahrer des Kraftfahrzeugs dort einen Parkschein ziehen kann. In dieser Situation können dem Fahrer des Kraftfahrzeugs die unterschiedlichen Parkscheinautomaten zur Ansteuerung vorgeschlagen werden. Beispielsweise wird von dem jeweiligen Parkscheinautomaten eine zugehörige Wartezeit an das Kraftfahrzeug übermittelt, welche das Kraftfahrzeug an den Fahrer ausgibt. In Abhängigkeit von der Eingabe des Fahrers kann die Steuereinrichtung das Kraftfahrzeug an den jeweiligen ausgewählten Parkscheinautomaten anmanövrieren und am zugehörigen Anhaltepunkt zum Stehen bringen. Der Fahrer hat somit vorteilhafterweise die Möglichkeit bei einer Mehrzahl von Anhaltepunkten, bei denen jeweils die Notwendigkeit für das Kraftfahrzeug besteht anzuhalten, einen Anhaltepunkt zu wählen, an welchem das Kraftfahrzeug anhalten soll.

Es hat sich darüber hinaus als vorteilhaft gezeigt, wenn bei einem am Anhaltepunkt angehaltenen Zustand des Kraftfahrzeugs in Abhängigkeit von dem Anhaltepunkt ein Fenster mittels der Steuereinrichtung heruntergefahren wird und/oder eine Energiesparmaßnahme mittels der Steuereinrichtung aktiviert wird. Beispielsweise kann beim Anhalten des Kraftfahrzeugs an einem dem Parkscheinautomaten zuordenbaren Anhaltepunkt nach dem Anhalten des Kraftfahrzeugs das Fenster mittels der Steuereinrichtung heruntergefahren werden, sodass der Fahrer des Kraftfahrzeugs besonders vorteilhaft und zeitsparend ein Parkticket aus dem Parkscheinautomaten entnehmen kann. Bei einem Anhalten des Kraftfahrzeugs an einem dem Bahnübergang, insbesondere der Schrankeneinrichtung, zuordenbaren Anhaltepunkt ist es vorteilhaft die Energiesparmaßnahme mittels der Steuereinrichtung zu aktivieren, wenn die Dauer für das Bestehen der Notwendigkeit oberhalb einer definierten Mindestdauer liegt. Folglich kann das Kraftfahrzeug besonders energiesparend betrieben werden.

Die Erfindung betrifft des Weiteren ein Kraftfahrzeug, welches dazu eingerichtet ist, ein Verfahren, wie es im Zusammenhang mit dem erfindungsgemäßen Verfahren beschrieben worden ist, durchzuführen. Vorteile des Verfahrens sind dabei auch als Vorteile des erfindungsgemäßen Kraftfahrzeugs zu erachten.

Zu der Erfindung gehören auch Weiterbildungen des erfindungsgemäßen Kraftfahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Kraftfahrzeugs hier nicht noch einmal beschrieben.

Im Folgenden sind Ausführungsbeispiele der Erfindung beschrieben. Hierzu zeigt:
- Fig. 1: eine schematische Seitenansicht des Kraftfahrzeugs, welches mittels einer Sensoreinrichtung einen Anhaltepunkt für das Kraftfahrzeug ermittelt; und
- Fig. 2: ein schematische Darstellung des Verfahrens zum Betreiben des Kraftfahrzeugs gemäß Fig. 1, bei welchem das Kraftfahrzeug den Anhaltepunkt ermittelt, eine Notwendigkeit am Anhaltepunkt anzuhalten ermittelt und eine von der Notwendigkeit abhängige Aktion des Kraftfahrzeugs auslöst.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

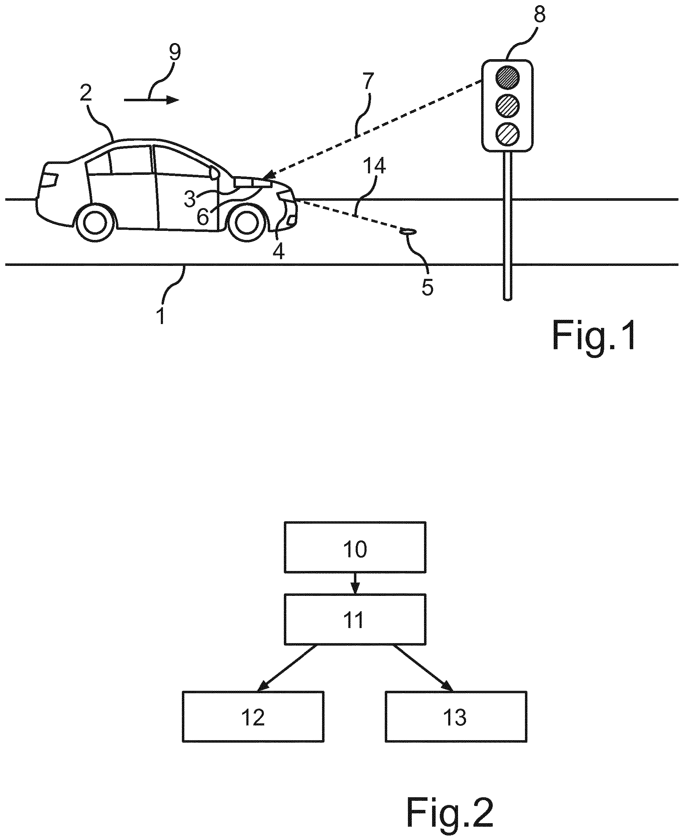

In Fig. 1 ist ein sich auf einer Fahrbahn 1 befindendes Kraftfahrzeug 2 in einer schematischen Seitenansicht dargestellt. Das Kraftfahrzeug 2 umfasst eine Steuereinrichtung 3, mittels welcher das Kraftfahrzeug 2 steuerbar ist. Darüber hinaus umfasst das Kraftfahrzeug 2 eine Sensoreinrichtung 4, mittels welcher ein Anhaltepunkt 5 für das Kraftfahrzeug 2, welcher vorliegend auf der Fahrbahn 1 liegt, ermittelbar ist. Darüber hinaus umfasst das Kraftfahrzeug 2 eine Erfassungseinrichtung 6, mittels welcher eine Anhalteinformation 7 von einer Verkehrsinfrastrukturkomponente 8, bei welcher es sich vorliegend um eine neben der Fahrbahn 1 angeordnete Ampel handelt, empfangbar ist. Der Anhaltepunkt 5 beziehungsweise die Position des Anhaltepunkts 5 relativ zur Fahrbahn 1 kann von einer Art der Verkehrsinfrastrukturkomponente 8 abhängen. So ist der Anhaltepunkt 5 bei einer als Ampel ausgebildeten Verkehrsinfrastrukturkomponente 8 in einem anderen Abstand von der Verkehrsinfrastrukturkomponente 8 angeordnet, als der Anhaltepunkt 5 bei einer als Parkscheinautomat ausgebildeten Verkehrsinfrastrukturkomponente 8.

Für ein sich in Fahrtrichtung 9 hinter dem Kraftfahrzeug 2 befindendes und in der Fig. 1 nicht dargestelltes weiteres Kraftfahrzeug kann ein zugeordneter Anhaltepunkt von dem Anhaltepunkt 5 des Kraftfahrzeugs 2 verschieden sein und von einer Position des Kraftfahrzeugs 2 relativ zu dem weiteren Kraftfahrzeug, relativ zur Verkehrsinfrastrukturkomponente 8 und relativ zur Fahrbahn 1 abhängen. Es hat sich als vorteilhaft gezeigt, wenn der dem weiteren Kraftfahrzeug zuordenbare Anhaltepunkt sich in Fahrtrichtung 9 des Kraftfahrzeugs 2 hinter dem Kraftfahrzeug 2 auf der Fahrbahn 1 befindet, sodass ein Risiko einer Kollision zwischen dem weiteren Kraftfahrzeug und dem Kraftfahrzeug 2 besonders gering gehalten wird.

In Fig. 2 ist ein Verfahrensschema zum Betreiben des Kraftfahrzeugs 2 dargestellt. Bei dem Verfahren wird in einem ersten Verfahrensschritt 10 mittels der Sensorikeinrichtung 4 des Kraftfahrzeugs 2 der Anhaltepunkt 5 für das Kraftfahrzeug 2 ermittelt. In einem zweiten Verfahrensschritt 11 ermittelt das Kraftfahrzeug 2 eine Notwendigkeit, am Anhaltepunkt 5 anzuhalten. Bei einem Bestehen 12 der Notwendigkeit bewirkt das Kraftfahrzeug 2 am Anhaltepunkt 5 ein Anhalten des Kraftfahrzeugs 2. Vorliegend manövriert die Steuereinrichtung 3 das Kraftfahrzeug 2 bei Bestehen 12 der Notwendigkeit an den Anhaltepunkt 5 heran und hält das Kraftfahrzeug 2 am Anhaltepunkt 5 an. Bei einem Nichtbestehen 13 der Notwendigkeit führt die Steuereinrichtung 3 des Kraftfahrzeugs 2 eine Bewegung des Kraftfahrzeugs 2 durch und/oder gibt einen das Nichtbestehen 13 der Notwendigkeit charakterisierenden Hinweis mittels einer Ausgabeeinrichtung an einen Fahrer des Kraftfahrzeugs 2 aus.

Dem in Zusammenhang mit den Fig. 1 und 2 beschriebenen Kraftfahrzeug 2 sowie dem im Zusammenhang mit dem Verfahrensschema aus Fig. 2 beschriebenen Verfahren zum Betreiben des Kraftfahrzeugs 2 liegt die Erkenntnis zugrunde, dass vernetzte Systeme bereits kontaktlose Zahlungsmöglichkeiten sowie eine anschließende Einfahrt in ein Parkhaus, beispielsweise durch ein automatisches Schrankenöffnen, für Fahrzeuge ermöglichen. Es gibt jedoch bisher keinerlei Assistenz für ein Anhaltemanöver und ein Weiterfahrmanöver an sich. Bisher muss der Fahrer eines Fahrzeugs einen geeigneten Anhaltepunkt erkennen und selbstständig zum Anhaltepunkt 5 manövrieren, um beispielsweise zu zahlen, ein Ticket zu ziehen, eine Schranke zu öffnen oder eine Schranke automatisch öffnen zu lassen. Dabei kann eine Strecke zum jeweiligen Anhaltepunkt 5 teilweise eine enge Anfahrt aufweisen, die mit einer engen Kurvenfahrt verbunden sein und/oder schlecht einsehbar ist und hierdurch für den Fahrer des Fahrzeugs schwer anzufahren sein. An Stellen, an welchen der Fahrer lange warten muss, wie beispielsweise an einem Bahnübergang, an einer Schranke, an einer Brücke, an einem Fährhafen, an einem Tor mit zeitlich beschränkter Einfahrt oder an einer Garage, ist der Fahrer bisher dazu angehalten zu beobachten, wann er weiterfahren kann. Gegebenenfalls ist der Fahrer jedoch abgelenkt und verpasst eine Möglichkeit weiterzukommen oder ein Ticket zu ziehen, wenn dies zu einem vorherigen Zeitpunkt nicht möglich war.

Mittels des im Zusammenhang mit Fig. 2 beschriebenen Verfahrens zum Betreiben des Kraftfahrzeugs 2 kann ein assistiertes oder automatisch mittels der Steuereinrichtung 3 durchgeführtes Anfahren und Anhalten an einer richtigen Position, vorliegend dem Anhaltepunkt 5, durchgeführt werden. Dabei kann der Anhaltepunkt 5 auch von dessen Art her bestimmt werden. Eine Ermittlung sowie eine Verifizierung des Anhaltepunkts 5 kann anhand einer Fusion von Umgebungsdaten, wie vorliegend die von der Verkehrsinfrastrukturkomponente 8 ausgesendete Anhalteinformation 7, mit Sensorikdaten 14 der Sensorikeinrichtung 4 erfolgen. Dabei kann die Sensorikeinrichtung 4 den Anhaltepunkt 5 vorliegend über ein nicht dargestelltes Kamerasystem des Kraftfahrzeugs 2 in Abgleich mit bekannten Datenquellen ermitteln, vorliegend mittels hochgenauer Navigationsdaten beziehungsweise Infrastrukturdaten einer spezifischen Umgebung des Kraftfahrzeugs 2, welche die Sensorikeinrichtung von einer übergeordneten Recheneinrichtung empfängt. Zusätzlich kann eine adaptierbare Automation erfolgen, indem individuelle Einstellungen beziehungsweise Präferenzen des Fahrers in die Ermittlung des Anhaltepunkts 5 mit einbezogen werden. Hierbei kann die Steuereinrichtung 3 bestimmte Kriterien einer Zielperson, vorliegend des Fahrers, welche fahrerindividuell von der Steuereinrichtung 3 erfasst und gespeichert worden sind, in die Ermittlung des Anhaltepunkts 5 mit einbeziehen. Hierbei handelt es sich vorliegend um einen für den jeweiligen Fahrer maximal akzeptablen Abstand zu einem Ticketschalter aufgrund einer Größe des Fahrers oder um andere individuelle Bedürfnisse. Diese Kriterien werden von der Steuereinrichtung 3 vorliegend aus einer digitalen ID, wie beispielsweise einem myAudi-Account oder fahrzeugindividuelle Einstellungen mit einem persönlichen Profil ausgelesen.

Eine adaptive Automation kann erfolgen, indem das Kraftfahrzeug 2 mittels der Sensorikeinrichtung 4 Änderungen von Gegebenheiten der spezifischen Umgebung ermittelt, welche nicht mit der Anhalteinformation 7 der Verkehrsinfrastrukturkomponente 8 und/oder der Infrastrukturdaten der spezifischen Umgebung übereinstimmen. Im Zuge der adaptiven Automation kann das Kraftfahrzeug 2 einen Anfahrtsweg an den Anhaltepunkt 5 und/oder den Anhaltepunkt 5 entsprechend den Sensorikdaten 14 anpassen.

Eine manuelle Anpassung des Anhaltepunkts 5 kann erfolgen, indem der Fahrer den Anhaltepunkt 5 vorliegend über Sprachkommandos beziehungsweise Sprachsteuerung konkret vorgibt und/oder nachrüstet. Als Sprachkommandos kann der Fahrer des Kraftfahrzeugs 2 "näher ran", "weiter vorn", oder "Insasse hinten links zahlt Ticket" beziehungsweise "Insasse hinten links zieht Ticket" an das Kraftfahrzeug 2 aussenden. Alternativ oder zusätzlich kann der Fahrer den Anhaltepunkt 5 mittels Gesten, einem Zeigen oder einem Drücken (Touchen) einer Eingabeeinrichtung auf eine visualisierte Umgebungskarte, welche im Kraftfahrzeug 2 auf einem Display oder auf einem digitalen Medium wie beispielsweise einem Smartphone, einer Smartwatch oder einer digitalen Datenbrille, dargestellt wird, den Anhaltepunkt 5 anpassen oder konkret vorgeben. Alternativ oder zusätzlich ist ein Zeigen auf eine reale Stelle außerhalb des Kraftfahrzeugs 2 zum Anpassen beziehungsweise Vorgeben des Anhaltepunkts 5 möglich, wobei der Fahrer eine Bestätigung des angepassten Anhaltepunkts 5 an der Eingabeeinrichtung eingeben kann. Ein Anzeigen des angepassten Anhaltepunkts 5 kann in die reale Umgebung eingebettet werden oder auf einem hochgenauen Kartenausschnitt der Umgebungskarte dargestellt werden.

Bei einem Vorhandensein von mehreren Kraftfahrzeugen innerhalb eines definierten Umkreises um das Kraftfahrzeug 2 kann kooperatives Verhalten berücksichtigt werden. Steuern mehrerer Kraftfahrzeuge den Anhaltepunkt 5 an, so können die mehreren Kraftfahrzeuge ihre gewünschten Anhaltepositionen miteinander koordinieren beziehungsweise absprechen. Die Koordination kann in Bezug auf eine zeitliche Reihenfolge vorliegend für ein Priorisieren der Kraftfahrzeuge zum Ticketziehen an einem Ticketschalter erfolgen, um eine maximale zeitliche Effizienz zu gewährleisten oder um bestimmte Kraftfahrzeuge mit wichtigen Personen zu bevorzugen. Die Koordinierung kann alternativ oder zusätzlich in Bezug auf eine Aufteilung der Kraftfahrzeuge auf verschiedene Anhaltepunkte erfolgen, vorliegend um auf einer Fähre eine Verteilung der verschiedenen Kraftfahrzeuge auf mehrere Fahrstreifen optimiert auszuführen, um hierdurch ein Gewicht der mehreren Kraftfahrzeuge auf der Fähre gleichmäßig zu verteilen.

Der Fahrer kann über die Anzeige über eine geplante Anhaltestrategie vorliegend in Bezug auf die zeitliche Reihenfolge oder einen gewählten Anhaltepunkt 5 von dem Kraftfahrzeug 2 informiert werden. Durch die Ermöglichung einer Eingabe mittels der Eingabeeinrichtung durch den Fahrer kann diesem eine Möglichkeit zur Beeinflussung, vorliegend zur Wahl eines anderen Anhaltepunkts oder einer anderen Priorisierung der Reihenfolge, gegeben werden. Vorliegend kann die Priorisierung der Reihenfolge durch Bezahlung verändert werden, sodass die Bezahlung ermöglicht, dass der Fahrer besonders schnell den Anhaltepunkt 5 anmanövrieren kann.

Der Anhaltepunkt 5 kann unterschiedliche Eigenschaften aufweisen. Beispielsweise kann es sich bei dem Anhaltepunkt 5 um einen Anhaltepunkt handeln, an dem der Fahrer etwas aus dem Kraftfahrzeug 2 heraus durch ein Autofenster erledigen soll, vorliegend einen Bezahlvorgang tätigen, ein Ticket ziehen, einen Knopf drücken oder ein Display bedienen. Alternativ kann es sich bei dem Anhaltepunkt 5 um einen Anhaltepunkt handeln, an dem der Fahrer etwas außerhalb des Kraftfahrzeugs 2 erledigen soll, vorliegend um einen Gegenstand abzugeben, sich persönlich an einer Wache vorstellen beziehungsweise identifizieren beziehungsweise untersuchen lassen oder etwas an einem Drive-In-Schalter abzuholen, um das Kraftfahrzeug 2 anschließend zu beladen. Alternativ oder zusätzlich kann es sich bei dem Anhaltepunkt 5 um einen Anhaltepunkt handeln, an dem der Fahrer warten muss, bis eine Weiterfahrt möglich ist, vorliegend an einem Anhaltepunkt vor einer Schranke, an einem Bahnübergang an einer Wippbrücke beziehungsweise Schwingbrücke beziehungsweise Klappbrücke, an einer Auffahrt zu einer Fähre oder an einer zeitweise gesperrten Einfahrt. Es kann sich bei dem Anhaltepunkt 5 überdies um einen Anhaltepunkt vor einem Eingang eines Routenziels, vorliegend am Ende einer Zielnavigation, an welchem ein Beifahrer des Kraftfahrzeugs 2 aussteigen möchte oder das Kraftfahrzeug 2 bei Erreichen des Routenziels autonom einparkt, handeln.

In Fällen, bei welchen das Kraftfahrzeug 2 an dem Anhaltepunkt 5 hält, an welchem der Fahrer oder ein anderer Insasse aus dem Kraftfahrzeug 2 heraus durch das Autofenster eine Aktion wie ein Ticket ziehen ausführen soll, fährt das Autofenster bei Erreichen des Anhaltepunkts 5 mittels der Steuereinrichtung 3 herunter. An dem Anhaltepunkt 5, an welchem der Fahrer warten muss, wie der Schranke, kann der Fahrer hinsichtlich mehrerer Aspekte unterstützt werden. Die Steuereinrichtung 3 meldet dem Fahrer rechtzeitig vor Erreichen des Anhaltepunkts 5, ob die Notwendigkeit zum Anhalten besteht, oder ob das Kraftfahrzeug 2 weiterfahren kann, beispielsweise weil die Schranke erst in zehn Sekunden runterfährt und der Fahrer bei Beibehaltung der Geschwindigkeit und unter Berücksichtigung eines aktuellen Verkehrsflusses die Schranke bereits in acht Sekunden passiert. Dabei wird dem Fahrer wenigstens eine Empfehlung in Bezug auf sein Fahrverhalten gegeben, um eine potentielle Wartezeit zu vermeiden. Als Empfehlung kann dem Fahrer vorliegend ausgegeben werden, dass "wenn Sie 30 Kilometer pro Stunde beibehalten, können Sie die Schranke passieren - diese schließt in zehn Sekunden". Ist die Wartezeit am Anhaltepunkt 5 absehbar, vorliegend aufgrund der von der Verkehrsinfrastrukturkomponente 8 mittels der Erfassungseinrichtung 6 empfangenen Anhalteinformation 7, welche an die Steuereinrichtung 3 übertragen wird, dann gibt die Steuereinrichtung 3 dem Fahrer eine Rückmeldung über eine Dauer der Wartezeit. Zusätzlich werden in Abhängigkeit von der Wartezeit Energiesparmaßnahmen wie eine Motorabschaltung, eine Reduzierung von Stromverbrauchern und/oder eine Anzeige eines Batteriemanagements durch die Steuereinrichtung 3 aktiviert oder dem Fahrer zur Aktivierung vorgeschlagen. Am Ende der Wartezeit gibt die Steuereinrichtung 3 dem Fahrer des Kraftfahrzeugs 2 einen Fahrhinweis aus, welcher charakterisiert, dass in Kürze weitergefahren werden kann. Dies kann erfolgen, indem eine Motor-Stopp-Phase beendet wird, ein Motor zugeschaltet wird, ein Fahrersitz vibriert oder dem Fahrer mittels der Anzeige ein optisches Signal ausgegeben wird, welches dieser auch bei Ablenkung besonders gut wahrnehmen kann. In Abhängigkeit von einem Aufmerksamkeitsstatus beziehungsweise einer Übernahmefähigkeit des Fahrers kann das Kraftfahrzeug 2 von der Steuereinrichtung 3 angefahren oder angerollt werden. Alternativ oder zusätzlich ist mittels der Steuereinrichtung 3 ein Anrucken des Kraftfahrzeugs 2 durchführbar, welches dazu dienen soll, einen unaufmerksamen Fahrer zu wecken.

Insgesamt zeigen die Beispiele, wie durch die Erfindung eine Anhalteassistenz für einen Fahrer des Kraftfahrzeugs 2 an Schranken, Mautstellen oder Fähren geschaffen werden kann.

## Patentansprüche

1. Verfahren zum Betreiben eines Kraftfahrzeugs (2), bei welchem
- mittels einer Sensorikeinrichtung des Kraftfahrzeugs (2) ein Anhaltepunkt (5) für das Kraftfahrzeug (2) ermittelt wird,
- das Kraftfahrzeug (2) eine Fahrinformation mit wenigstens einem weiteren Kraftfahrzeug (2) austauscht und in Abhängigkeit von der Fahrinformation den Anhaltepunkt (5) ermittelt, wobei über den Austausch der Fahrinformation zwischen den Kraftfahrzeugen Anhaltevorgänge der Kraftfahrzeuge miteinander koordiniert werden,
- das Kraftfahrzeug (2) eine Notwendigkeit am Anhaltepunkt (5) anzuhalten ermittelt,
- das Kraftfahrzeug (2) bei Bestehen (12) der Notwendigkeit am Anhaltepunkt (5) ein Anhalten des Kraftfahrzeugs (2) bewirkt, und
- bei Nichtbestehen (13) der Notwendigkeit eine Steuereinrichtung (3) des Kraftfahrzeugs (2) eine Bewegung des Kraftfahrzeugs (2) durchführt oder einen das Nichtbestehen (13) der Notwendigkeit charakterisierenden Hinweis an einen Fahrer des Kraftfahrzeugs (2) ausgibt,
**dadurch gekennzeichnet, dass**
das Kraftfahrzeug (2) von dem Fahrer über Sprachsteuerung und/oder Gestensteuerung eine Einstellinformation bezüglich einer einzustellenden Position des angehaltenen Kraftfahrzeugs (2) empfängt und in Abhängigkeit davon die Position des Kraftfahrzeugs (2) einstellt und das Kraftfahrzeug (2) die einzustellende Position in Abhängigkeit von dem Anhaltepunkt (5) fahrerspezifisch speichert.

2. Verfahren nach Anspruch 1, wobei die Steuereinrichtung (3) das Kraftfahrzeug (2) bei Bestehen (12) der Notwendigkeit an den Anhaltepunkt (5) manövriert und am Anhaltepunkt (5) anhält.

3. Verfahren nach Anspruch 1 oder Anspruch 2, wobei das Kraftfahrzeug (2) eine Anhalteinformation (7) von einer Verkehrsinfrastrukturkomponente (8) empfängt und in Abhängigkeit von der Anhalteinformation (7) den Anhaltepunkt (5) ermittelt und/oder die Notwendigkeit am Anhaltepunkt (5) anzuhalten ermittelt.

4. Verfahren nach Anspruch 3, wobei das Kraftfahrzeug (2) in Abhängigkeit von der Anhalteinformation (7) einen Zeitpunkt und eine Dauer für das Bestehen (12) der Notwendigkeit ermittelt und an den Fahrer ausgibt.

5. Verfahren nach einem der vorhergehenden Ansprüche, wobei das Kraftfahrzeug (2) wenigstens zwei Anhaltepunkte (5) ermittelt und in Abhängigkeit von einer einen ersten der Anhaltepunkte (5) charakterisierenden Eingabe des Fahrers das Kraftfahrzeug (2) den ersten Anhaltepunkt (5) mittels der Steuereinrichtung (3) anmanövriert und an diesem in Abhängigkeit von der Notwendigkeit anhält.

6. Verfahren nach einem der vorhergehenden Ansprüche, wobei bei einem am Anhaltepunkt (5) angehaltenen Zustand des Kraftfahrzeugs (2) in Abhängigkeit von dem Anhaltepunkt (5) ein Fenster mittels der Steuereinrichtung (3) heruntergefahren wird und/oder eine Energiesparmaßnahme mittels der Steuereinrichtung (3) aktiviert wird.

7. Kraftfahrzeug (2), welches dazu eingerichtet ist, ein Verfahren nach einem der Ansprüche 1 bis 6 durchzuführen.

## Claims

1. Method for operating a motor vehicle (2), in which
- by means of a sensor apparatus of the motor vehicle (2) a stopping point (5) for the motor vehicle (2) is determined,
- the motor vehicle (2) exchanges a driving information with at least one further motor vehicle (2) and, depending on the driving information, determines the stopping point (5), wherein, by means of the exchange of the driving information between the motor vehicles, stopping procedures of the motor vehicles are coordinated with one another,
- the motor vehicle (2) determines a necessity of stopping at the stopping point (5),
- if the necessity at the stopping point (5) exists (12), the motor vehicle (2) effects a stopping of the motor vehicle (2), and,
- if the necessity does not exist (13) a control apparatus (3) of the motor vehicle (2) carries out a movement of the motor vehicle (2) or outputs an instruction to a driver of the motor vehicle (2) which characterises the non-existence (13) of the necessity,
**characterised in that**
the motor vehicle (2) receives from the driver by means of voice control and/or gesture control a setting information with regard to a position to be set of the stopped motor vehicle (2) and, depending thereon, sets the position of the motor vehicle (2), and the motor vehicle (2) stores the position to be set depending on the stopping point (5) in a driver-specific manner.

2. Method according to claim 1, wherein if the necessity exists (12), the control apparatus (3) manoeuvres the motor vehicle (2) to the stopping point (5) and stops it at the stopping point (5).

3. Method according to claim 1 or claim 2, wherein the motor vehicle (2) receives a stopping information (7) from a traffic infrastructure component (8) and, depending on the stopping information (7), determines the stopping point (5) and/or determines the necessity of stopping at the stopping point (5).

4. Method according to claim 3, wherein, depending on the stopping information (7), the motor vehicle (2) determines a point of time and a duration for the existence (12) of the necessity and outputs it to the driver.

5. Method according to any of the preceding claims, wherein the motor vehicle (2) determines at least two stopping points (5) and, depending on an input of the driver which characterises a first of the stopping points (5), manoeuvres the motor vehicle (2) to the first stopping point (5) by means of the control apparatus (3) and stops it at this stopping point depending on the necessity.

6. Method according to any of the preceding claims, wherein in a state of the motor vehicle (2) having stopped at the stopping point (5), depending on the stopping point (5) a window is lowered by means of the control apparatus (3) and/or an energy saving measure is activated by means of the control apparatus (3).

7. Motor vehicle (2) which is configured to carry out a method according to any of claims 1 to 6.

## Revendications

1. Procédé de fonctionnement d'un véhicule automobile (2), dans lequel
- un point d'arrêt (5) pour le véhicule automobile (2) est déterminé au moyen d'un dispositif de détection du véhicule automobile (2),
- le véhicule automobile (2) échange une information de conduite avec au moins un véhicule automobile supplémentaire (2) et détermine le point d'arrêt (5) en fonction de l'information de conduite, dans lequel des processus d'arrêt des véhicules automobiles sont coordonnés entre eux par l'échange de l'information de conduite entre les véhicules automobiles,
- le véhicule automobile (2) détermine un besoin de s'arrêter au point d'arrêt (5),
- le véhicule automobile (2) provoque un arrêt du véhicule automobile (2) en cas d'existence (12) du besoin au point d'arrêt (5), et
- en cas de non-existence (13) du besoin, un dispositif de commande (3) du véhicule automobile (2) effectue un mouvement du véhicule automobile (2) ou émet une indication caractérisant la non-existence (13) du besoin à un conducteur du véhicule automobile (2),
**caractérisé en ce que**
le véhicule automobile (2) reçoit du conducteur, par commande vocale et/ou gestuelle, une information de réglage relative à une position à régler du véhicule automobile (2) arrêté et règle la position du véhicule automobile (2) en fonction de celle-ci, et le véhicule automobile (2) enregistre la position à régler de manière spécifique au conducteur en fonction du point d'arrêt (5).

2. Procédé selon la revendication 1, dans lequel le dispositif de commande (3) manœuvre le véhicule (2) vers le point d'arrêt (5) en cas d'existence (12) du besoin et s'arrête au point d'arrêt (5).

3. Procédé selon la revendication 1 ou la revendication 2, dans lequel le véhicule automobile (2) reçoit une information d'arrêt (7) d'un composant d'infrastructure routière (8) et détermine le point d'arrêt (5) et/ou détermine le besoin de s'arrêter au point d'arrêt (5) en fonction de l'information d'arrêt (7).

4. Procédé selon la revendication 3, dans lequel le véhicule automobile (2) détermine et émet au conducteur un moment et une durée pour l'existence (12) du besoin en fonction de l'information d'arrêt (7).

5. Procédé selon l'une quelconque des revendications précédentes, dans lequel le véhicule automobile (2) détermine au moins deux points d'arrêt (5) et, en fonction d'une entrée du conducteur caractérisant un premier des points d'arrêt (5), le véhicule automobile (2) manœuvre vers le premier point d'arrêt (5) au moyen du dispositif de commande (3) et s'y arrête en fonction du besoin.

6. Procédé selon l'une quelconque des revendications précédentes, dans lequel, lorsque le véhicule automobile (2) est arrêté au point d'arrêt (5), une vitre est abaissée au moyen du dispositif de commande (3) et/ou une mesure d'économie d'énergie est activée au moyen du dispositif de commande (3) en fonction du point d'arrêt (5).

7. Véhicule automobile (2), lequel est configuré pour mettre en œuvre un procédé selon l'une quelconque des revendications 1 à 6.
